# EUROPEAN PATENT SPECIFICATION

(11) **EP 3 163 697 B1**
(45) Date of publication and mention of the grant of the patent: **02.09.2020**
(21) Application number: 15192116.0
(22) Date of filing: 29.10.2015
(51) Int. Cl.: H02G 1/12

(54) **SEPARATING A SHIELDING OF A COAXIAL CABLE**
TRENNUNG EINER SCHIRMUNG EINES KOAXIALKABELS
SÉPARATION D'UN BLINDAGE D'UN CÂBLE COAXIAL

(43) Date of publication of application: 03.05.2017
(73) Proprietor: Lisa Dräxlmaier GmbH, 84137 Vilsbiburg (DE)
(72) Inventor: Hernandez, Jesus, 78183 San Luis Potosí (MX); Garcia, Alejandra, 78310 San Luis Potosí (MX); Chavez, Javier, 78434 Soledad de Graciano Sanchez (MX); Urbina, Estib, 78394 San Luis Potosí (MX)

(56) References cited:
- EP-B1- 1 096 628
- DE-A1- 2 043 644
- US-A- 3 153 358
- US-A- 3 171 306
- US-A- 4 914 986
- US-A1- 2015 288 153

## Description

The invention relates to a method for separating a shielding of a coaxial cable.

EP 1 096 628 B1 discloses a method for separating and removing the shielding from a cable, in which the shielding oriented in an axial direction of the cable and enclosing the electric conductor is laid bare at least at one cable end by cutting and removing an insulating sheath part piece, and held clamped in an axial direction and is telescoped and compressed to an annular ring, larger with respect to the likewise clamped insulating sheath, and oriented to open out externally in a peripheral direction, wherein a cutting unit, which can be swung approximately transversely to the longitudinal axis in the direction of the cable, and is fitted with two cutting blades movable relative to one another, is fed to the annular ring positioned between two clamping fixtures, which can be moved in an axial direction of the cable, arranged at a distance from one another and relative to one another, and by means of the same a circular part piece separating the shielding is cut off.

US 4,914,986 discloses a shielding wires removing machine for automatically removing a desired length of shielding wires from a shielded cable, which includes a blade body secured to the base and having a blade aperture whose edge forms a circular blade; a movable sleeve able to slide in the blade aperture along a longitudinal axis; a movable cable holder provided in front of the fixed blade body and having a holding aperture and a shield guide concentrically about the longitudinal axis, the shield guide having a diameter sufficiently large to receive an exposed shield portion of the shielded cable but too small to receive the shielded cable; a pressure bar disposed in a side hole provided at right angles to the holding aperture for holding by pressure the shielded cable in place within the holding aperture; and a movable clamp provided behind the fixed blade body and having a plurality of clamp elements movable in radial directions to form a variable opening concentrically about the longitudinal axis.

US 3 153 358 A discloses a method for separating a shielding of a coaxial cable. The coaxial cable is inserted through a first tubular guide member if a first cable holder and into a second tubular guide member of a second cable holder. The coaxial cable holder is fastened at the first cable holder and the shielding is fastened by the second cable holder. The shielding is compressed to an annular ring by moving the cable holders towards each other. The tubular guide members are automatically moved into contact with each other to cut the annular ring.

DE 20 436 44 A1 discloses an apparatus for stripping a selected length of sheathing from a coaxial cable and the like. A die is positioned about the coaxial cable and a hollow cylindrical-shaped die is inserted beneath the sheathing to a depth commensurate with the amount to be stripped, accurate adjustment being controlled by an interior mounted slidable scale member. The two die members are brought into abrupt engagement with one another by being moved either linearly and/or rotationally relative to one another whereby the selected length of sheathing is stripped therefrom.

It is the object of the present invention to at least partially overcome the problems of the prior art.

The object is achieved by the features of the independent claim 1. Advantageous embodiments can be derived, e.g., from the dependent claims.

The object is achieved by a method for separating a shielding of a coaxial cable, in which method a) the coaxial cable is inserted through a first tubular guide member of a first cable holder and into a second tubular guide member of a second cable holder, b) the coaxial cable is fastened automatically at the first cable holder and the shielding is automatically fastened by the second cable holder, the tubular guide members being positioned at a distance from each other, c) the shielding between the tubular guide members is compressed to an annular ring by automatically moving the cable holders towards each other, d) a hold of the shielding by one of the cable holders is automatically released, and e) the tubular guide members are automatically moved into contact with each other to cut the annular ring, at least one of the tubular guide members having a cutting edge facing the other tubular guide member and the cutting edge is the edge or rom of at least one of the tubular guide members, wherein at least one of the tubular guide members performs a rotating motion around its longitudinal axis.

This gives the advantage that an end section of the shielding can be separated from the rest of the coaxial cable and can be easily removed afterwards. The method is highly automated which reduces operator errors and avoids injury to the operator. Also, the method can be implemented by a mechanically simple and robust design.

A coaxial cable typically comprises an inner conductor (core) surrounded by a tubular insulating layer, surrounded by a tubular conducting shield. Many coaxial cables also have an insulating outer sheath or jacket.

The tubular guide members may comprise a tubular hole or cavity for inserting the coaxial cable. Their outside shape does not need to be tubular or cylindrical. At least one of the tubular guide members and holes, resp., may be linear. If both tubular guide members are linear, their longitudinal axes may coincide. Alternatively, at least one of the tubular guide members may be curved. Curvature should be such that an insertion through or into the tubular guide members is possible without use of tools, in particular by gliding only.

If a coaxial cable is inserted through the first tubular guide member, its frontal end will be able to move towards and into an opening of the second tubular guide member.

The coaxial cable may be inserted into the second tubular guide member (i.e. into an opening facing the first tubular guide member) without exiting it on the other side or opening, or the coaxial cable may be inserted into the second tubular guide member while being able to protrude from the other end or opening (i.e. being inserted through the guide member).

When in step b) the coaxial cable is automatically fastened by the cable holders (e.g. by respective fasting means like grips etc.), the guide members are positioned at a distance from each other. Thus, a section of the coaxial cable between the tubular guide members is exposed. By this fastening, at least the shielding may be fixed with respect to the cable holders and may also be fixed with respect to the guide members. In particular, the core may be fastened by only one of the cable holders or by none of the cable holders, but not by both cable holders. The automatic fastening allows for a particularly safe and fast handling of the cable. The automatic fastening can be initiated by a user, e.g., by pressing a respective button of a control device.

When in step c) the cable holders (in particular their fasting means) are moving towards each other, they compress the shielding of the exposed section of the coaxial cable because the shielding is fixed with respect to the tubular guide members. The compressed shielding extends in a radial or lateral direction with respect to the longitudinal axis of the coaxial cable (that coincides with the moving direction of the tubular guide members). When the cable holders are close to each other, the shielding has formed an annular ring. To form the annular ring, the cable holders do not need to be pressed together, but may be. A remaining distance between them of, e.g., 1 cm, in particular 7 mm, in particular 5 mm, in particular 3 mm, in particular 2 mm, in particular 1 mm, in particular 0.5 mm, may be enough to permanently create such an annular ring.

That the cable holders are moving or are moved may comprise moving only the first cable holder (in particular its fasting means), only the second tubular guide member (in particular its fasting means), or both (in particular their fasting means).

It is an embodiment that the annular ring radially or laterally extends over at least one of the tubular guide members. This may include that the annular ring radially or laterally extends over both tubular guide members. Alternatively or additionally, the annular ring radially or laterally extends over a contact area of the tubular guide members, i.e. an area where the two tubular guide members come into contact.

That in step d) a hold on the shielding or coaxial cable by one of the cable holders is automatically released includes that the coaxial cable is still fastened or held by the other cable holder. If the second cable holder releases its hold, it does release the shielding. A cable holder releasing its hold may, e.g., include opening a grip.

It is another embodiment that - after step d) and before step e) - the tubular guide members are automatically moved apart from each other. This may include that the cable holders are moved apart from each other, too. In this case, the annular ring remains since it has been permanently formed, e.g., by plastic deformation. This gives the advantage that an impulse of at least one of the tubular guide members for cutting the annular ring in the following step e) can be increased which facilitates the cutting.

In step e), no separate cutting means is needed. The cutting edge is the edge or rim of at least one of the tubular guide members that faces the other tubular guide member. The cut or punch achieves that the shielding is cut into three separate sections, i.e. one section inserted into the first tubular guide member and remaining with the coaxial cable, one section comprising at least part of the annular ring, and one section inserted into the second tubular guide member which can be stripped off the coaxial cable. The cutting or cut may comprise an annular cutting or cut. This enables a particularly effective cutting of the annular ring. If there is no rotating motion, the cutting of the annular ring may also be viewed as a punching of the annular ring.

In step e), the each one or both of the tubular guide members may be moved.

It is another embodiment that the first cable holder is static and the second cable holder is movable or moved to and from the first cable holder. This enables a particularly simple and robust design. Thus, in analogy, the first tubular guide member is static while the second tubular guide member can be moved from and to (back and forth with respect to) the first tubular guide member.

Also, the second tubular guide member may be movable or can be moved along its longitudinal axis relative to a fastening means of the second cable holder. In particular, the second tubular guide member may be movable or can be moved through a released fastening member of the second cable holder. This allows a particularly simple and robust design.

In particular, the movable second tubular guide member is also the tubular guide member which performs the rotating motion. This gives the advantage that the other tubular member can be static and may thus be of a particularly simple design.

It is another embodiment that the at least one cable holder is moved such that the respective at least one tubular guide member is moved along its longitudinal axis. By doing so, the coaxial cable can be inserted in a particularly easy manner, and unwanted bending of the coaxial cable can be avoided. In particular, both tubular guide members can be aligned in a straight line that coincides with their longitudinal axes.

It is another embodiment that the coaxial cable is gripped by the first cable holder (in particular by its grip or gripping means) and the shielding is gripped by the second cable holder (in particular its grip). Gripping gives the advantage of an easy implementation to fasten the coaxial cable and the shielding, respectively, without damaging the coaxial cable. Also, a gripping force may be adjusted. Additionally, grippers can be operated automatically.

It is another embodiment that the coaxial cable comprises an outer sheath and that an end section of the outer sheath is stripped off before step a), wherein the stripped-off length is such that in step b) the coaxial cable between the two tubular guide members has no sheath. This gives the advantage that the shielding may be deformed in a particularly easy manner. The sheath may be stripped off manually. The exposed end section is then inserted into the guide members.

In particular, in step b), the coaxial cable may be fastened at the sheath or directly at the shielding by the first cable holder, depending on how much length of the sheath has been stripped off. If the coaxial cable is fastened at the sheath by the first cable holder, the fastening includes fastening of the underlying shielding.

Alternatively, the coaxial cable is a sheathless coaxial cable.

It is another embodiment that, in step a), the coaxial cable is stopped by an end stop of the second cable holder. This allows precisely setting a length of the shielding to be removed. A position of the end stop may be adjustable to allow removing shieldings of different lengths.

It is another embodiment that, before step a), the first tubular guide member and the second tubular guide member are automatically brought together from a start position in which the tubular guide members are spaced apart from each other. This allows for a particularly easy insertion of the coaxial cable into the guide members.

After insertion, the tubular guide members may be separated, in particular automatically, to be in a position to perform step b). In particular if a position of the coaxial cable is to be adjusted manually, such an adjustment can be performed after the tubular guide members have been separated but before the fastening of the coaxial cable in step b). This can be done with or without having an end stop. For example, a user can simply slide the coaxial cable to its desired position. Such a desired position may be reached when a rim of a sheath is positioned flush or in alignment with a rim of the first tubular guide member that points towards the second tubular guide member.

It is another embodiment that, after step e), the tubular guide members are automatically moved apart. This facilitates removal of the cut annular ring and the separated section of the shielding. This movement may bring the tubular guide members back into the start position. That the tubular guide members are automatically moved apart may include that the cable holders are moved apart.

In general, the tubular insulating layer may be deformed and cut alongside or with the shielding. Alternatively, the tubular insulating layer may remain at the inner conductor. Features of the present invention are now schematically described by way of an exemplary embodiment.
Fig.1 to 9 shows a side-sectional view of a stripping apparatus in different steps of separating a shielding of a coaxial cable;
Fig.10 shows a side view of a stripped coaxial cable;
Fig.11 shows an oblique bottom view on a first cable holder; and
Fig.12 shows an oblique top view on a first cable holder.

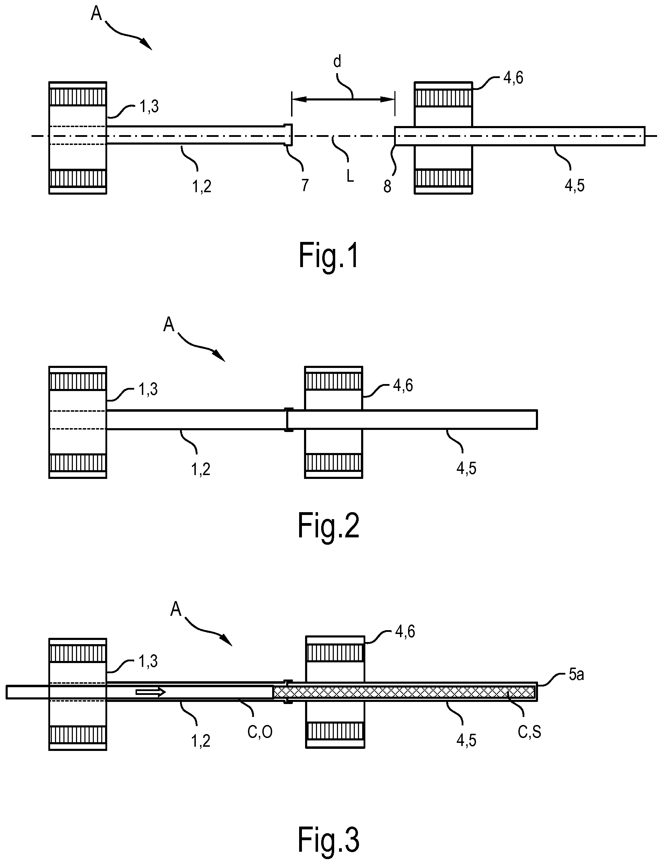

Fig.1 shows components of a stripping apparatus A, namely a first cable holder 1 comprising a first tubular guide member 2 and, next to it, a first gripping device or grip 3 as well as a second cable holder 4 comprising a second tubular guide member 5 and a second grip 6. The tubular guide members 2 and 5 are aligned in a straight line L that coincides with both longitudinal axes. The tubular guide members 2 and 5 are spaced apart from each other by a distance d. This position of the stripping apparatus A may be called a start position.

While the first tubular guide member 2 comprises a sleeve 7 at its end facing the second tubular guide member 5, the second tubular guide member 5 has a cutting edge 8 at its end facing the first tubular guide member 2.

To start a stripping process, the cable holders 1 and 4 and thus the tubular guide members 2 and 5 are optionally brought together, as shown in Fig.2. In this closed position, the second tubular guide member 5 is inserted into sleeve 7 such that the cutting edge 8 may or may not be in contact with the first tubular guide member 2. Thus a continuous tubular guide is provided.

To bring the tubular guide members 2 and 5 together, the second cable holder 4 is moved along the line L towards the first cable holder 1, e.g., automatically by a motor (not shown).

Next, in a step a) seen in Fig.3, a coaxial cable C is inserted through the first tubular guide member 2 and into a second tubular guide member 5, as indicated by the arrow. The grips 3, 6 are in a released position or open which may correspond to their jaws being widely separated.

The second tubular guide member 5 is closed at its far end 5a such that this far end 5a provides an end stop for the coaxial cable C. Alternatively, the second tubular guide member 5 may be open at both sides while no end stop is provided.

An end section of an outer isolating sheath O of the coaxial cable C has already been stripped off manually, exposing a metallic shielding S at a front section of the coaxial cable C.

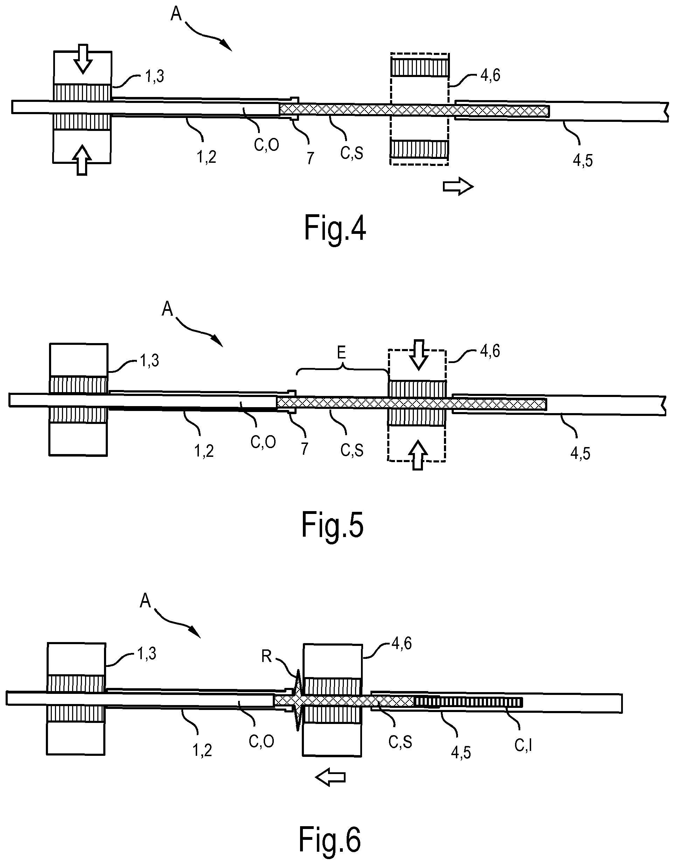

Fig.4 shows at least a sub-step of a following step b) in which the first grip 3 automatically grips the coaxial cable C, and then the second cable holder 4 is moved along line L such that the tubular guide members 2 and 5 are again spaced apart from each other. Alternatively, the first grip 3 is handled manually.

In case that there is no end stop 5a, the second cable holder 4 may be moved along line L after Fig.3 to separate the tubular guide members 2 and 5 as shown while both grips 3, 6 are released or open. Then, a position of the coaxial cable C within the tubular guide members 2 and 5 may be adjusted manually until a desired position is reached. Such a position may be a position in which a rim of the outer isolating sheath O is positioned flush to the sleeve 7 (not shown). Then, both grips 3 and 6 may be fastened or closed. This may happen at the same time or sequentially. The manual adjustment gives the advantage that a length of the manually separated part of the outer isolating sheath O does not need to be precisely set.

In both cases, the moving of the second cable holder 4 includes that the second tubular guide member 5 is moved a longer distance than the second grip 6. To achieve this, the second tubular guide member 5 is movable relative to the second grip 6 in the same direction along line L. In particular, the second tubular guide member 5 is moved so much further than the second grip 6 that the second grip 6 is positioned in front of the second tubular guide member 5. Thus a fastening or closing of the second grip 6 is not hindered by the second tubular guide member 5.

Fig.5 shows another at least one sub-step of step b) for the case that an end stop has been used. In this case, the second grip 6 automatically grips the shielding S of the coaxial cable C.

Thus, in step b) the coaxial cable C is automatically fastened by the first cable holder 1 and the shielding S is automatically fastened by the second cable holder 4 while the guide members 2 and 5 are positioned at a distance from each other. A section E of the shielding S between the first tubular guide member 2 and the second grip 6 is exposed. This applies for the position setting of the coaxial cable C by the end step 5a and by the manual adjustment.

Fig.6 shows a step c) in which the second cable holder 4 has been moved towards the first cable holder 1, thus also moving the tubular guide members 2 and 5 towards each other. By doing so, the exposed section E of shielding S is compressed to an annular ring R. The gripping force of the second grip 6 is not so strong that an inner core I of the coaxial cable C is also held. Therefore, by moving the second cable holder 4, the shielding S is moved relative to the core. The annular ring R is radially or laterally (with respect to line L) extending over the tubular guide members 2 and 5.

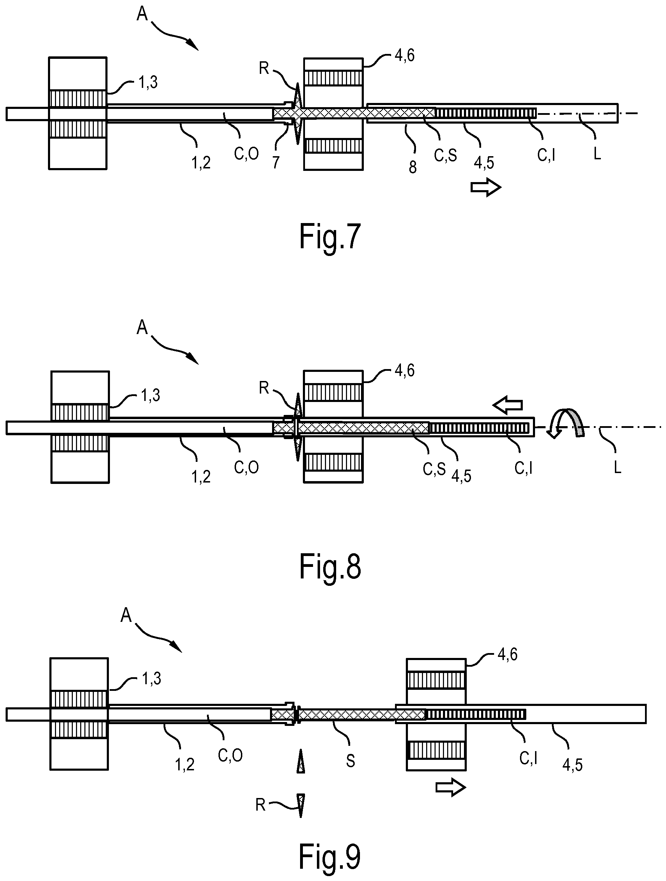

Fig.7 shows a step d) in which the second grip 6 of the second cable holder 4 is automatically released or opened.

In a following optional step, the tubular guide members 2 and 5 are automatically moved apart from each other by moving the second cable holder 4 away from the first cable holder 1.

The annular ring R remains because it underwent a plastic deformation in step c).

Fig. 8 shows a next step e) in which the second tubular guide member 5 is automatically moved towards the first tubular guide member 2 through the second grip 6 such that the tubular guide members 2 and 5 contact each other. In this step, the cutting edge 8 of the second tubular guide member 5 contacts the first tubular guide member 2, therefore cutting the annular ring R at its base. In step e), the second tubular guide member 5 may perform a rotating motion around line L to facilitate cutting off the annular ring R. The second grip 6 may remain unmoved or static.

Fig.9 shows a next step in which - after cutting the annular ring R - the second cable holder 4 has been moved away from the first cable holder 1 again. Then, the coaxial cable C can be pulled out of the tubular guide members 2 and 5 after releasing the first grip 3 of the first cable holder 1. The cut-off section of the shielding S that remains in the second cable holder 4 can also be removed. The annular ring R typically just falls off.

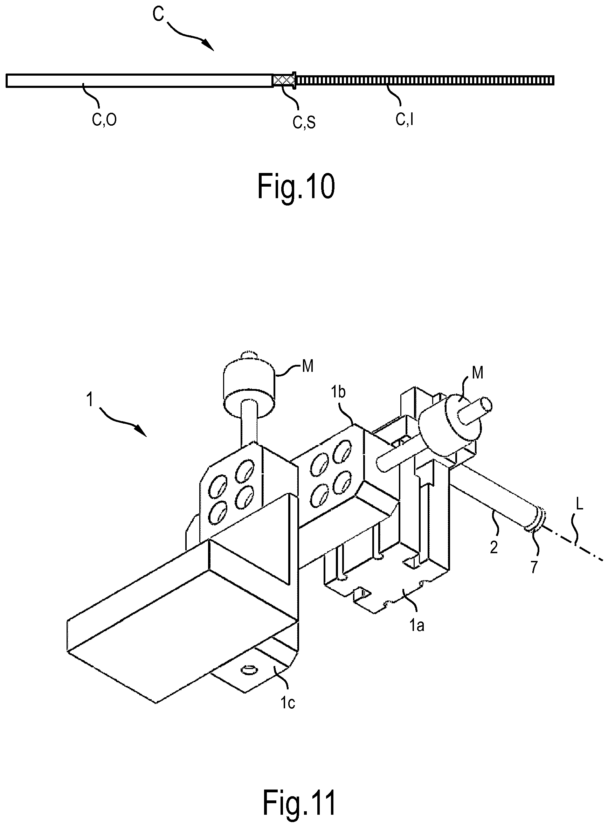

Fig.10 shows the resulting coaxial cable C, an end section of which has the inner core I exposed. There may still be a short section of the shielding S exposed. To avoid such an exposed shielding S, the coaxial cable C may, e.g., be inserted into the first tubular guide member 2 such that the edge of the outer sheath O coincides with the free edge of the sleeve 7 or is flush to the free edge of the sleeve 7.

Fig.11 shows components of the first cable holder 1 including the first tubular guide member 2. The first cable holder 1 additionally comprises several parts 1a, 1b, and 1c that allow an adjustment of the lateral position of the tubular guide member 2 on two directions (here: up/down, left/right) with respect to the longitudinal axis of the first tubular guide member 2, as represented by line L. To this effect, two adjusting screws M are used. The adjusting screws M may be operated manually or may be motor-driven.

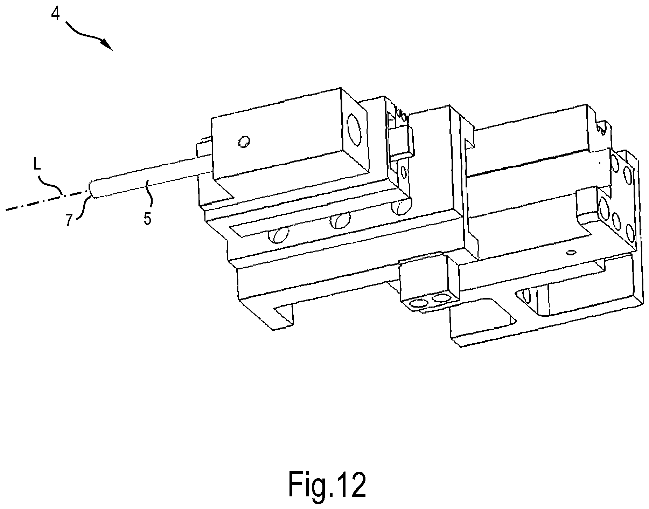

Fig.12 shows components of the second cable holder 4 including the second tubular guide member 5. The second cable holder 4 may be moved by a motor (not shown).

Of course, the invention is not restricted to the shown embodiments.

For example, the first cable holder 1 may be moved instead or additionally to the second cable holder 4.

Also, a tubular insulating layer may be present between the shielding and the inner core, and this tubular insulating may be deformed and cut alongside or with the shielding.

Alternatively, the tubular insulating layer may remain at the inner conductor.

In particular Fig.4 to 9 may be performed in one automated process.

Generally, the steps may be performed chronologically in the described order. Alternatively, at least two steps or substeps may be performed in a reversed order.

### List of Reference Signs

- 1: first cable holder
- 1a: part of first cable holder
- 1b: part of first cable holder
- 1c: part of first cable holder
- 2: first tubular guide member
- 3: first grip
- 4: second cable holder
- 5: second tubular guide member
- 5a: far end / end stop
- 6: second grip
- 7: sleeve
- 8: cutting edge
- A: stripping apparatus
- C: coaxial cable
- d: distance
- E: section of the shielding
- I: inner core
- L: line
- M: adjusting screws
- O: outer isolating sheath
- R: annular ring
- S: shielding

## Claims

1. A method for separating a shielding (S) of a coaxial cable (C), in which
a) the coaxial cable (C) is inserted through a first tubular guide member (2) of a first cable holder (1) and into a second tubular guide member (5) of a second cable holder (4),
b) the coaxial cable (C) is fastened automatically at the first cable holder (1) and the shielding (S) is automatically fastened by the second cable holder (4), the tubular guide members (2, 5) being positioned at a distance (d) from each other,
c) the shielding (S) between the tubular guide members (2, 5) is compressed to an annular ring (R) by automatically moving the cable holders (1, 4) towards each other,
d) a hold of the shielding (S) by one of the cable holders (1, 4) is automatically released, and
e) the tubular guide members (2, 5) are automatically moved into contact with each other to cut the annular ring (R), at least one of the tubular guide members (5) having a cutting edge (8) facing the other tubular guide member (2) and the cutting edge is the edge or rim of at least one of the tubular guide members, wherein at least one of the tubular guide members (2, 5) performs a rotating motion around its longitudinal axis (L).

2. The method according to any of the preceding claims, in which the tubular guide members (2, 5) are automatically moved apart from each other after step d) and before step e) .

3. The method according to any of the preceding claims, in which the first cable holder (1) is static and the second cable holder (4) is movable towards and from the first cable holder (1).

4. The method according to any of the preceding claims, in which the at least one cable holder (1, 4) is moved such that the at least one respective tubular guide member (2, 5) is moved along its longitudinal axis (L).

5. The method according to any of the preceding claims, in which, in step b), the coaxial cable (C) is automatically fastened by the first cable holder (1) and the shielding (S) is automatically fastened by the second cable holder (4).

6. The method according to any of the preceding claims, in which, the coaxial cable (C) is gripped by the first cable holder (1) and the shielding (S) is gripped by the second cable holder (4).

7. The method according to any of the preceding claims, in which the coaxial cable (C) comprises an outer sheath (O) and in which an end section of the outer sheath (O) is stripped off before step a), wherein the stripped-off length is such that in step b) a section (E) of the coaxial cable (C) between the two tubular guide members (2, 5) has no sheath and the coaxial cable is fastened at the sheath or directly at the shielding by the first cable holder, depending on how much length of the sheath has been stripped off.

8. The method according to any of the preceding claims, in which, in step a), the coaxial cable (C) is stopped by an end stop (5a) of the second cable holder (4).

9. The method according to any of the preceding claims, in which, before step a), the first tubular guide member (2) and the second tubular guide member (5) are automatically brought together from a start position wherein at the start position the tubular guide members (2, 5) are spaced apart from each other.

10. The method according to any of the preceding claims, in which, after step e), the tubular guide members (2, 5) are automatically moved apart.

11. The method according to any of the preceding claims, in which the tubular guide member (5) of the second cable holder (4) is movable relative to the fastening means (6) of the second cable holder (4).

12. The method according to claim 11, in which, to perform step e), the tubular guide member (5) of the second cable holder (4) is moved through the released fastening means (6) of the second cable holder (4).

13. The method according to claim 12, in which the tubular guide member (5) is moved through opened gripper jaws of the fastening means (6).

## Patentansprüche

1. Verfahren zum Trennen einer Abschirmung (S) eines Koaxialkabels (C), bei welchem
a) das Koaxialkabel (C) durch ein erstes rohrförmiges Führungselement (2) eines ersten Kabelhalters (1) und in ein zweites rohrförmiges Führungselement (5) eines zweiten Kabelhalters (4) eingeführt wird,
b) das Koaxialkabel (C) automatisch an dem ersten Kabelhalter (1) befestigt wird und die Abschirmung (S) durch den zweiten Kabelhalter (4) automatisch befestigt wird, wobei die rohrförmigen Führungselemente (2, 5) in einem Abstand (d) voneinander positioniert werden,
c) die Abschirmung (S) zwischen den rohrförmigen Führungselementen (2, 5) zu einem ringförmigen Ring (R) zusammengedrückt wird, indem die Kabelhalter (1, 4) automatisch in Richtung zueinander bewegt werden,
d) ein Halten der Abschirmung (S) durch einen der Kabelhalter (1, 4) automatisch gelöst wird, und
e) die rohrförmigen Führungselemente (2, 5) automatisch miteinander in Kontakt gebracht werden, um den ringförmigen Ring (R) zu durchtrennen, wobei mindestens eines der rohrförmigen Führungselemente (5) eine Trennkante (8) aufweist, welche in Richtung nach dem anderen rohrförmigen Führungselement (2) zeigt, und die Trennkante die Kante oder der Rand von mindestens einem der rohrförmigen Führungselemente ist, wobei mindestens eines der rohrförmigen Führungselemente (2, 5) eine Drehbewegung um seine Längsachse (L) herum durchführt.

2. Verfahren nach einem der vorhergehenden Ansprüche, bei welchem die rohrförmigen Führungselemente (2, 5) nach Schritt d) und vor Schritt e) automatisch voneinander wegbewegt werden.

3. Verfahren nach einem der vorhergehenden Ansprüche, bei welchem der erste Kabelhalter (1) statisch ist und der zweite Kabelhalter (4) in Richtung auf den ersten Kabelhalter (1) und von ihm weg beweglich ist.

4. Verfahren nach einem der vorhergehenden Ansprüche, bei welchem der mindestens eine Kabelhalter (1, 4) derartig bewegt wird, dass das mindestens eine jeweilige rohrförmige Führungselement (2, 5) entlang seiner Längsachse (L) bewegt wird.

5. Verfahren nach einem der vorhergehenden Ansprüche, bei welchem in Schritt b) das Koaxialkabel (C) durch den ersten Kabelhalter (1) automatisch befestigt wird und die Abschirmung (S) durch den zweiten Kabelhalter (4) automatisch befestigt wird.

6. Verfahren nach einem der vorhergehenden Ansprüche, bei welchem das Koaxialkabel (C) durch den ersten Kabelhalter (1) gegriffen wird und die Abschirmung (S) durch den zweiten Kabelhalter (4) gegriffen wird.

7. Verfahren nach einem der vorhergehenden Ansprüche, bei welchem das Koaxialkabel (C) eine äußere Ummantelung (O) aufweist und bei welchem ein Endabschnitt der äußeren Ummantelung (O) vor Schritt a) abisoliert wird, wobei die Abisolierlänge derartig ist, dass in Schritt b) ein Abschnitt (E) des Koaxialkabels (C) zwischen den beiden rohrförmigen Führungselementen (2, 5) keine Ummantelung aufweist und das Koaxialkabel in Abhängigkeit davon, wie viel Länge der Ummantelung abisoliert worden ist, durch den ersten Kabelhalter an der Ummantelung oder direkt an der Abschirmung befestigt wird.

8. Verfahren nach einem der vorhergehenden Ansprüche, bei welchem in Schritt a) das Koaxialkabel (C) durch einen Endanschlag (5a) des zweiten Kabelhalters (4) gestoppt wird.

9. Verfahren nach einem der vorhergehenden Ansprüche, bei welchem vor Schritt a) das erste rohrförmige Führungselement (2) und das zweite rohrförmige Führungselement (5) von einer Startposition aus automatisch zusammengebracht werden, wobei die rohrförmigen Führungselemente (2, 5) in der Startposition voneinander beabstandet sind.

10. Verfahren nach einem der vorhergehenden Ansprüche, bei welchem die rohrförmigen Führungselemente (2, 5) nach Schritt e) automatisch auseinander bewegt werden.

11. Verfahren nach einem der vorhergehenden Ansprüche, bei welchem das rohrförmige Führungselement (5) des zweiten Kabelhalters (4) relativ zu dem Befestigungsmittel (6) des zweiten Kabelhalters (4) beweglich ist.

12. Verfahren nach Anspruch 11, bei welchem, um Schritt e) durchzuführen, das rohrförmige Führungselement (5) des zweiten Kabelhalters (4) durch das gelöste Befestigungsmittel (6) des zweiten Kabelhalters (4) hindurchbewegt wird.

13. Verfahren nach Anspruch 12, bei welchem das rohrförmige Führungselement (5) durch geöffnete Greifbacken des Befestigungsmittels (6) hindurchbewegt wird.

## Revendications

1. Procédé de séparation d'un blindage (S) d'un câble coaxial (C), dans lequel :
a) le câble coaxial (C) est inséré par un premier élément de guidage tubulaire (2) d'un premier support de câble (1) et dans un second élément de guidage tubulaire (5) d'un second support de câble (4),
b) le câble coaxial (C) est fixé automatiquement au niveau du premier support de câble (1) et le blindage (S) est fixé automatiquement par le second support de câble (4), les éléments de guidage tubulaires (2, 5) étant positionnés à une distance (d) l'un de l'autre,
c) le blindage (S) entre les éléments de guidage tubulaires (2, 5) est compressé contre une bague annulaire (R) en déplaçant automatiquement les supports de câble (1, 4) l'un vers l'autre,
d) un maintien du blindage (S) par un des supports de câble (1, 4) est automatiquement libéré, et
e) les éléments de guidage tubulaires (2, 5) sont déplacés automatiquement en contact l'un avec l'autre pour couper la bague annulaire (R), au moins un des éléments de guidage tubulaires (5) ayant une arête de coupe (8) en regard de l'autre élément de guidage tubulaire (2) et l'arête de coupe est l'arête ou le bord d'au moins un des éléments de guidage tubulaires, au moins un des éléments de guidage tubulaires (2, 5) effectuant un déplacement rotatif autour de son axe longitudinal (L).

2. Procédé selon l'une quelconque des revendications précédentes, dans lequel les éléments de guidage tubulaires (2, 5) sont séparés automatiquement l'un de l'autre après l'étape d) et avant l'étape e).

3. Procédé selon l'une quelconque des revendications précédentes, dans lequel le premier support de câble (1) est statique et le second support de câble (4) est mobile vers le premier support de câble (1) et depuis celui-ci.

4. Procédé selon l'une quelconque des revendications précédentes, dans lequel l'au moins un support de câble (1, 4) est déplacé de sorte que l'au moins un élément de guidage tubulaire (2, 5) respectif soit déplacé le long de son axe longitudinal (L).

5. Procédé selon l'une quelconque des revendications précédentes, dans lequel, à l'étape b), le câble coaxial (C) est fixé automatiquement par le premier support de câble (1) et le blindage (S) est fixé automatiquement par le second support de câble (4).

6. Procédé selon l'une quelconque des revendications précédentes, dans lequel le câble coaxial (C) est saisi par le premier support de câble (1) et le blindage (S) est saisi par le second support de câble (4).

7. Procédé selon l'une quelconque des revendications précédentes, dans lequel le câble coaxial (C) comprend une gaine externe (O) et dans lequel une section d'extrémité de la gaine externe (O) est dénudée avant l'étape a), la longueur dénudée étant telle qu'à l'étape b) une section (E) du câble coaxial (C) entre les deux éléments de guidage tubulaires (2, 5) n'a pas de gaine et le câble coaxial est fixé au niveau de la gaine ou directement au niveau du blindage par le premier support de câble, selon la longueur de la gaine qui a été dénudée.

8. Procédé selon l'une quelconque des revendications précédentes, dans lequel, à l'étape a), le câble coaxial (C) est arrêté par une butée d'extrémité (5a) du second support de câble (4).

9. Procédé selon l'une quelconque des revendications précédentes, dans lequel, avant l'étape a), le premier élément de guidage tubulaire (2) et le second élément de guidage tubulaire (5) sont rapprochés automatiquement depuis une position de départ, dans laquelle les éléments de guidage tubulaires (2, 5) sont séparés l'un de l'autre.

10. Procédé selon l'une quelconque des revendications précédentes, dans lequel, après l'étape e), les éléments de guidage tubulaires (2, 5) sont séparés automatiquement.

11. Procédé selon l'une quelconque des revendications précédentes, dans lequel les éléments de guidage tubulaires (5) du second support de câble (4) sont mobiles par rapport au moyen de fixation (6) du second support de câble (4).

12. Procédé selon la revendication 11, dans lequel, pour réaliser l'étape e), l'élément de guidage tubulaire (5) du second support de câble (4) est déplacé dans le moyen de fixation (6) libéré du second support de câble (4).

13. Procédé selon la revendication 12, dans lequel l'élément de guidage tubulaire (5) est déplacé dans des mâchoires de saisie ouvertes du moyen de fixation (6).
